# EUROPEAN PATENT APPLICATION

(11) **EP 4 485 943 A1**
(43) Date of publication of application: **01.01.2025**
(21) Application number: 22929007.7
(22) Date of filing: 28.02.2022
(51) Int. Cl.: H04N 21/422, H04N 21/485

(54) **SYSTEM COMPRISING TV AND REMOTE CONTROL, AND CONTROL METHOD THEREFOR**

(71) Applicant: LG Electronics Inc., Yeongdeungpo-gu Seoul 07336 (KR)
(72) Inventor: BAEK, Sanghyun, Seoul 06772 (KR); SEOL, Seongwoon, Seoul 06772 (KR); CHO, Eunyoung, Seoul 06772 (KR)
(74) Representative: Schornack, Oliver
(86) International application number: PCT/KR2022/002855
(87) International publication number: WO 2023/163254

(57) **Abstract**

A control method for a system comprising a TV and a remote control, according to an embodiment of the present invention, comprises the steps of: outputting, through a screen of the TV, a video signal of content received from an STB; outputting, through a speaker of the TV, an audio signal of content received from the STB; receiving, through a microphone of the remote control, a first wake word corresponding to an AI speaker of the STB; transmitting, through a wireless communication transceiver of the remote control, the first wake word to a transceiver of the TV; and outputting, through the speaker of the TV, a second wake word.

## Description

### [Technical Field]

The disclosure relates to a television (TV), a remote control, a set top box (STB), an artificial intelligence (AI) speaker, and so on. For example, the technical idea of the disclosure is applicable to any technology that may improve the speech recognition performance of an AI speaker using a TV or a TV remote control.

### [Background Art]

Recently, telecommunication companies (e.g. LGU, SKT, KT, and so on in Korea, and ones in other countries) have been increasingly provided AI speakers together with STBs. In this case, when a user utters a voice command, an AI speaker that recognizes the voice command may conveniently control various connected home appliances and Internet of things (IoT) devices.

However, when the AI speaker is installed, for example, in a large living space, other peripheral devices may degrade the speech recognition performance of the AI speaker. In particular, the AI speaker is usually installed around a TV, which makes it difficult to control the AI speaker well due to an audio output from a TV speaker.

Similar to AI speakers, recent released TVs are equipped with the function of controlling other home appliances connected to the same network as the TVs. However, implementation of this function in a current TV requires that other home appliances connected to the same network be from the same manufacturer as the TV.

On the contrary, an AI speaker often doesn't require that other home appliances to be controlled be from the same manufacturer as the AI speaker. Therefore, when home appliances in a house are controlled through an AI speaker rather than a TV, a wider range of home appliances may be controlled, and thus it is important to improve the speech recognition performance of the AI speaker.

However, in view of audio outputs from other external devices (e.g., a TV) installed around the AI speaker, speech recognition and control of the AI speaker often fails, as described above. To solve this problem, the prior art requires the user to manually turn off the TV or turn down its sound volume and retry the same speech to the AI speaker multiple times.

### [Disclosure]

### [Technical Problem]

One of embodiments of the disclosure is intended to provide a solution of automatically recognizing a specific AI speaker and a wake-up word provided by a telecommunication company by a TV.

One of embodiments of the disclosure is intended to improve the speech recognition performance of an AI speaker using a TV and a TV remote control.

One of embodiments of the disclosure is intended to provide a process of more quickly controlling an AI speaker using a TV remote control.

### [Technical Solution]

A method of controlling a system including a TV and a remote control according to an embodiment of the disclosure includes outputting a video signal of content received from an STB through a screen of the TV, outputting an audio signal of the content received from the STB through a speaker of the TV, receiving a first wake-up word corresponding to an AI speaker of the STB through a microphone of the remote control, transmitting the first wake-up word to a transceiver of the TV through a wireless communication transceiver of the remote control, and outputting a second wake-up word through the speaker of the TV.

For example, the method further includes, when the second wake-up word is output, stopping the output of the audio signal of the content or reducing a volume of the audio signal of the content, according to a volume level of the TV. Further, when the volume level of the TV is set to 75% or more of a maximum value, the output of the audio signal of the content is stopped.

For example, the method further includes, when the second wake-up word is output, stopping the output of the audio signal of the content or reducing a volume of the audio signal of the content, according to ambient noise of the TV. Further, when the ambient noise of the TV is equal to or greater than 85dB, the output of the audio signal of the content is stopped.

The ambient noise of the TV is acquired through a microphone of the TV.

Further, the first wake-up word and the second wake-up word are the same or different.

The AI speaker may be implemented, for example, separately from the STB or integrally with the STB.

The method further includes storing the first wake-up word by mapping the first wake-up word to a specific number on the remote control in a memory of the TV, and outputting the second wake-up word through the speaker of the TV in response to selection of the specific number on the remote control.

A system according to an embodiment of the disclosure includes a TV outputting a video signal and an audio signal of content received from an STB, and a remote control receiving a first wake-up word corresponding to an AI speaker of the STB and transmitting the first wake-up word to the TV. Particularly, the TV is designed to output a second wake-up word.

### [Advantageous Effects]

According to one of embodiments of the disclosure, the technical effect of automatically recognizing a specific AI speaker and a wake-up word provided by a telecommunication company by a TV is achieved.

According to one of embodiments of the disclosure, the technical effect of improving the speech recognition performance of an AI speaker using a TV and a TV remote control is achieved.

According to one of embodiments of the disclosure, the technical effect of providing a process of more quickly controlling an AI speaker using a TV remote control is achieved.

In addition to various technical effects which have not been explicitly described above, effects derived by those skilled in the art from the description and drawings of the present application are also other features of the disclosure.

### [Description of Drawings]

FIG. 1 illustrates an environment in which the speech recognition performance of an AI speaker is degraded according to conventional technology.
FIG. 2 is a diagram illustrating an overall system according to one of embodiments of the disclosure.
FIG. 3 is a flowchart sequentially illustrating an operation of each device included in an overall system according to one of embodiments of the disclosure.
FIG. 4 is a detailed block diagram illustrating components of a TV and a remote control according to one of embodiments of the disclosure.
FIG. 5 is a diagram illustrating a process of recognizing a wake-up word of a telecommunication company by a TV according to one of embodiments of the disclosure.
FIG. 6 is a diagram illustrating a process of changing a wake-up word of an AI speaker of a telecommunication company using a remote control of a TV according to one of embodiments of the disclosure.
FIG. 7 is a diagram illustrating a process of changing a wake-up word of an AI speaker of a telecommunication company using a mobile device according to one of embodiments of the disclosure.
FIG. 8 is a diagram illustrating a process of controlling an AI speaker by a TV according to one of embodiments of the disclosure.
FIG. 9 is a diagram illustrating a process of processing an unsupported wake-up word of an AI speaker by a TV according to one of embodiments of the disclosure.
FIG. 10 is a diagram illustrating a process of processing an unsupported command of an AI speaker by a TV according to one of embodiments of the disclosure.
FIG. 11 is a diagram illustrating a process of learning and processing a user speech pattern by a TV according to one of embodiments of the disclosure in order to prevent erroneous recognition of an AI speaker.
FIG. 12 is a diagram illustrating a process of adaptively improving the speech recognition performance of an AI speaker by taking into account a surrounding environment or a sound volume state by a TV according to one of embodiments of the disclosure.
FIG. 13 is a diagram illustrating a process of separately displaying a wake-up word and a command by a TV according to one of embodiments of the disclosure.

### [Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

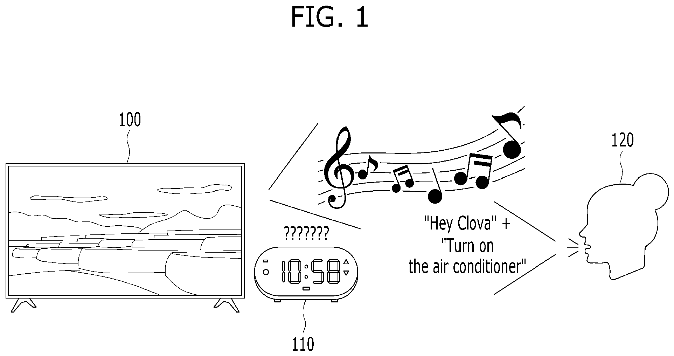

FIG. 1 illustrates an environment in which the speech recognition performance of an AI speaker is degraded according to conventional technology.

While not shown in FIG. 1, it is assumed that an AI speaker 110 is wiredly or wirelessly connected to various electronic devices in a house through a communication network. Therefore, upon recognition of a voice command from a user 120, the AI speaker 110 may wiredly or wirelessly transmit a command for controlling a corresponding electronic device.

The AI speaker 110 is designed to have speech recognition of the AI speaker 110 triggered by a wake-up word (e.g., "Hey Clova") and then recognize a subsequent user speech (e.g., "Turn on the air conditioner").

However, when a TV 100 outputting other audio, for example, is installed in the vicinity of the AI speaker 110 as illustrated in FIG. 1, the speech recognition performance of the AI speaker 110 is degraded. In particular, the AI speaker 110 may be designed to be integrated with an STB (not shown) connected to the TV 100. In this case, the STB (integrated with the AI speaker) is inevitably installed around the TV 100. Obviously, the scope of the disclosure should be determined by the claims, and the disclosure is also applicable even when the STB and the AI speaker 110 are designed to be separate.

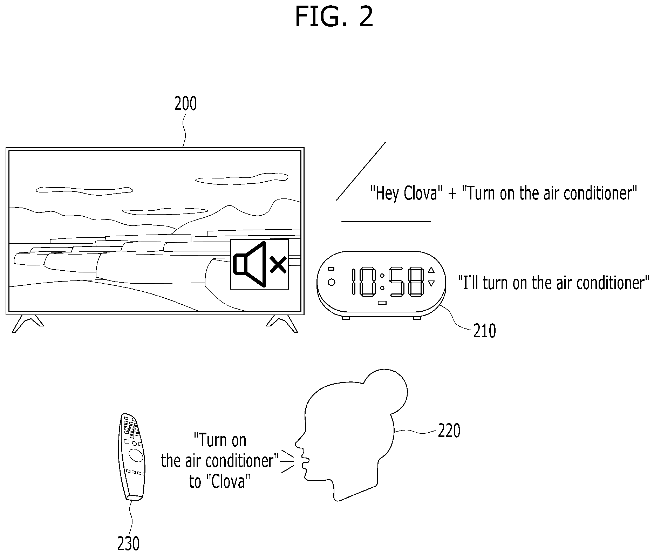

Embodiments of the disclosure have been derived to solve the problems arising from, for example, the environment illustrated in FIG. 1, and will be described below in more detail with reference to FIG. 2 and the accompanying drawings.

FIG. 2 is a diagram illustrating an overall system according to one of embodiments of the disclosure.

As illustrated in FIG. 2, an AI speaker 210 is designed to use at least one of a TV 200 or a TV remote control 230 to improve the speech recognition performance of the AI speaker 210.

A user 220 utters a wake-up word and a command (e.g., "Turn on the air conditioner to Clova") to the AI speaker 210 through a microphone (not shown) of a TV remote control 230.

The TV remote control 230, which is paired with the TV 200 through wireless communication or the like, transmits the user's speech to the TV 200.

The TV 200 may output the user's speech received from the TV remote control 230 as it is, or the TV 200 may be designed to change the user's speech into a format (e.g., "Hey Clova" + "Turn on the air conditioner") recognizable by the AI speaker and output it through a speaker (not shown) of the TV 200, as illustrated in FIG. 2.

Accordingly, the technical effect of improving the speech recognition performance of the AI speaker 210 adjacent to the TV 200 is achieved.

Further, when the TV 200 is outputting other audio (e.g., audio data included in a broadcast program), the current volume of the audio of the broadcast program may be automatically reduced or muted to further improve the speech recognition performance of the AI speaker 210.

Additionally, even when the volume of current audio output from the TV 200 is low, the TV 200 may be designed to detect current ambient noise via a microphone (not shown), and when the ambient noise is equal to or greater than a preset dB, automatically mute the audio of the broadcast program.

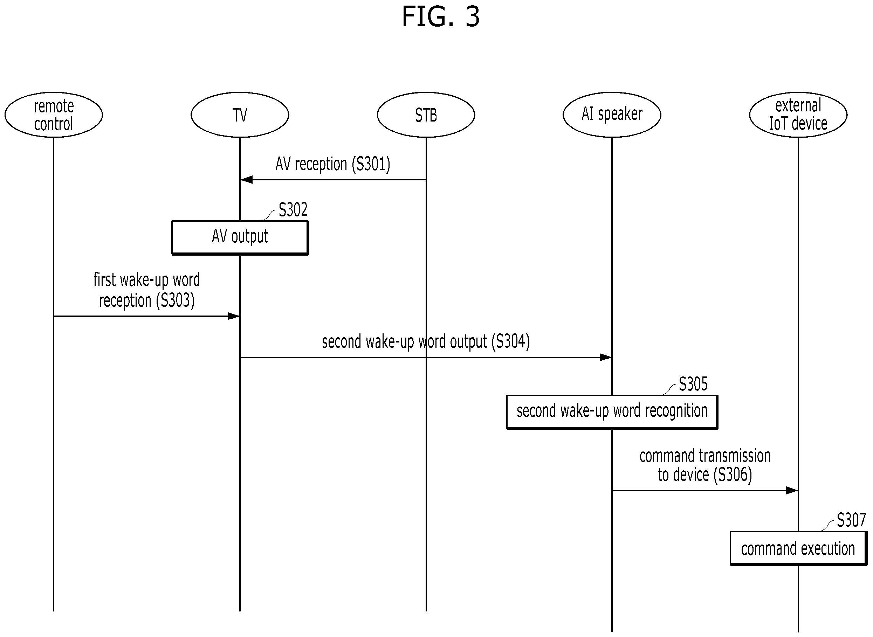

FIG. 3 is a flowchart sequentially illustrating an operation of each device included in an overall system according to one of embodiments of the disclosure. While various devices are shown in FIG. 3, the scope of the disclosure should be determined by the claims. For example, the technical idea of the disclosure may be implemented using only a single device or a plurality of devices (e.g., a TV and a remote control).

As described above, although an STB and an AI speaker are shown in FIG. 3 as being separate, it is also within the scope of the disclosure to implement them as an integrated unit.

Further, while FIG. 3 illustrates a single external IoT device, at least one external IoT device is connected to the AI speaker through a wired or wireless network, and the external IoT device is not limited to the same manufacturer as the AI speaker.

The TV according to an embodiment of the disclosure is designed to receive any content (AV data) from the STB (S301). The content corresponds to, for example, a broadcast program, a VoD service, or the like. Obviously, the disclosure is also applicable even in the case where the TV does not receive content from the STB, but outputs AV data of a broadcast program received from a broadcast station via a built-in antenna.

Further, the TV according to an embodiment of the disclosure outputs a video signal of the content received from the STB on a screen, and outputs an audio signal of the content received from the STB via a speaker (S302).

It is assumed that a user utters a first wake-up word corresponding to the AI speaker of the STB through a microphone of a remote control (which is paired with the TV via a wireless network). A wireless communication transceiver of the remote control is designed to transmit the first wake-up word to a transceiver of the TV (S303).

Further, the TV according to an embodiment of the disclosure outputs a second wake-up word recognizable by the AI speaker based on the first wake-up word received from the remote control (S304).

As described above, the first wake-up word in step S303 and the second wake-up word in step S304 may be the same or different.

For example, when the user utters "Hey Clova" as the first wake-up word, the second wake-up word is also output as "Hey Clova". Alternatively, when the user utters "Clova" or "To Clova" as the first wake-up word, the AI speaker is not capable of recognizing this, and thus the TV according to an embodiment of the disclosure changes the first wake-up word into the format of "Hey Clova" and outputs it as the second wake-up word.

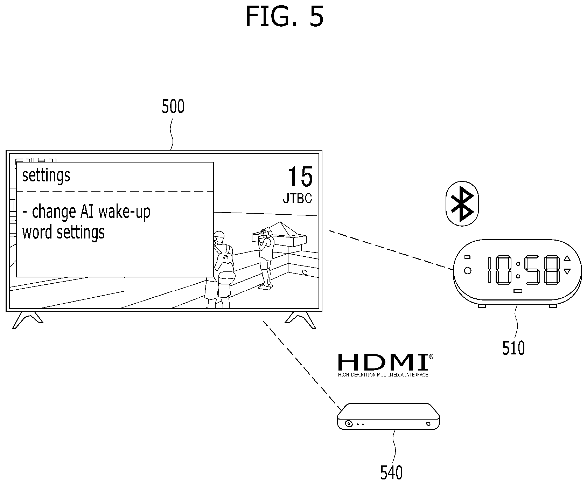

To implement this, the TV should know the wake-up word of the AI speaker, and related embodiments will be described later in more detail with reference FIGS. 5 to 7.

Referring to FIG. 3 again, because the AI speaker is located near the TV, it is capable of recognizing the second wake-up word output through the speaker of the TV without error (S305).

Further, the AI speaker transmits a command to a corresponding device via a wired or wireless network, referring to the second wake-up word (S306), and the external IoT device receiving the command automatically executes the command (S307).

While not shown in FIG. 3, the TV according to an embodiment of the disclosure is designed to further consider the current audio state and ambient environment state of the TV in order to improve the speech recognition performance of the AI speaker.

For example, when the TV according to an embodiment of the disclosure outputs the second wake-up word (S304), it stops outputting the audio signal of the content received in step S301 or reduces the volume of the audio signal of the content, depending on a volume level of the TV. More specifically, for example, when the volume level of the TV is set to 75% or more of a maximum value, the TV stops the audio signal output of the content, thereby contributing to the speech recognition performance of the AI speaker.

In another example, when the TV according to an embodiment of the disclosure outputs the second wake-up word (S304), it stops outputting the audio signal of the content received in step S301 or reduces the volume of the audio signal of the content, depending on ambient noise of the TV. More specifically, for example, when the ambient noise of the TV is 85dB or more, the TV outputs the audio signal output of the content, thereby contributing to the speech recognition performance of the AI speaker. The ambient noise of the TV is obtained, for example, via the microphone installed on the TV or the remote control.

Further, the TV according to an embodiment of the disclosure is designed to store a wake-up word ("Turn on the air conditioner to Clova" or "Hey Clova, turn on the air conditioner") by mapping it to a specific number (1) on the remote control. Thus, even when the user selects (or long presses) the specific number on the TV remote control without uttering a voice command, the TV according to an embodiment of the disclosure may output the wake-up word through the speaker, referring to a memory.

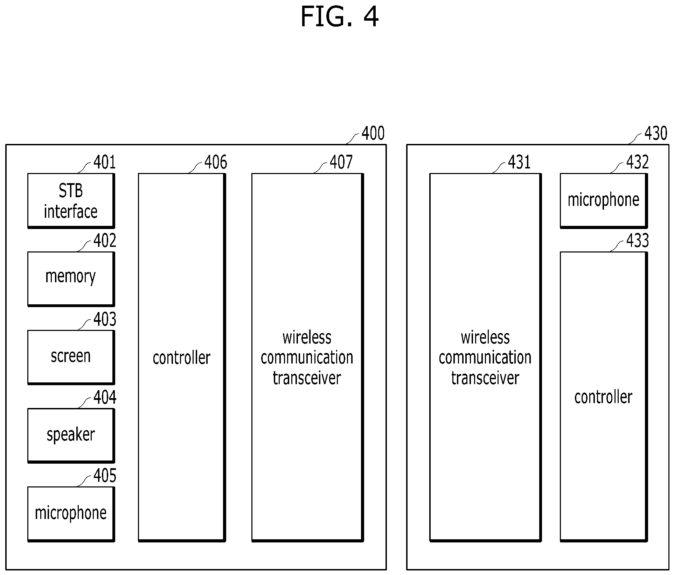

FIG. 4 is a detailed block diagram illustrating components of a TV and a remote control according to one of embodiments of the disclosure.

The technical idea (e.g., improving the speech recognition performance of an AI speaker) of the disclosure may be implemented, for example, in a system including the TV and remote control of FIG. 3 described above.

As illustrated in FIG. 4, a TV 400 according to an embodiment of the disclosure includes an STB interface 401, a memory 402, a screen 403, a speaker 404, a microphone 405, a controller 406, and a wireless communication transceiver 407.

A TV remote control 430 according to an embodiment of the disclosure includes a wireless communication transceiver 431, a microphone 432, and a controller 433. However, the scope of the disclosure does not necessarily include all of these components. Rather, it is to be determined by the claims.

The STB interface 401 of the TV 400 outputs video and audio signals of content (e.g., a broadcast program). The video signal of the received content is output through the screen, and the audio signal of the received content is output through the speaker 404.

The microphone 432 of the remote control 430 receives a first wake-up word (corresponding to an AI speaker of the STB) uttered by a user, and transmits the received first wake-up word to the TV 400 via the wireless communication transceiver 431 under the control of the controller 433.

When the first wake-up word transmitted by the wireless communication transceiver 431 of the remote control 430 is received via the wireless communication transceiver 407, a second wake-up word is output through the speaker 404 under the control of the controller 406.

Accordingly, the technical effect that the AI speaker (not shown) in the vicinity is able to recognize the second wake-up word output through the speaker 404 of the TV 400 quickly and without error is achieved.

Further, the controller 406 is designed to stop outputting the audio signal of the content and/or reduce the volume of the audio signal of the content based on a current set volume level of the TV, before or during outputting of the second wake-up word through the speaker 404. For example, when the volume level of the TV is set to 75% or more of a maximum value, the controller 406 is designed to stop outputting the audio signal of the content. Such a design has the technical effect of solving the problem that an audio being output through the speaker 404 of the TV 400 degrades the speech recognition performance of the AI speaker.

The controller 406 is designed to stop outputting the audio signal of the content and/or reduce the volume of the audio signal of the content based on ambient noise of the TV 400 (acquired and recognized through the microphone 405 of the TV 400), before or during outputting of the second wake-up word through the speaker 404. For example, when the ambient noise of the TV 400 is equal to or greater than 85dB, the controller 406 is designed to stop outputting the audio signal of the content. Such a design has the technical effect of solving the problem that the speech recognition performance of the AI speaker is degraded due to the ambient noise/noise of the TV 400.

The controller 406 illustrated in FIG. 4 is used to provide overall control to the components of the TV 400, and the controller 433 illustrated in FIG. 4 is used to provide overall control to the components of the remote control 430.

FIG. 5 illustrates a process of recognizing a wake-up word of an AI speaker of a telecommunication company by a TV according to one of embodiments of the disclosure.

As described above, the TV according to an embodiment of the disclosure should be able to automatically recognize that a user's voice command received via a remote control is intended to control an AI speaker. A solution to address this will be described below with reference to FIG. 5.

A TV 500 according to an embodiment of the disclosure may receive identification information (e.g., LG U+, SKT, KT, or the like) about an STB 540 from the STB 540, for example, via an HDMI interface. Since an AI speaker 510 is typically provided by a manufacturer of the STB 540, a wake-up word of the AI speaker may be recognized from STB information (e.g., the wake-up word of LG U+ is "Clova").

Obviously, the TV 500 according to an embodiment of the disclosure may also be designed to directly obtain information (e.g., wake-up word information) about the AI speaker by wirelessly communicating directly with the AI speaker 510, for example, through a BT discovery process.

Further, it will be appreciated that it is within another scope of the disclosure to output a menu for changing an initially set wake-up word of the AI speaker 510 via a screen of the TV 500, as illustrated in FIG. 5.

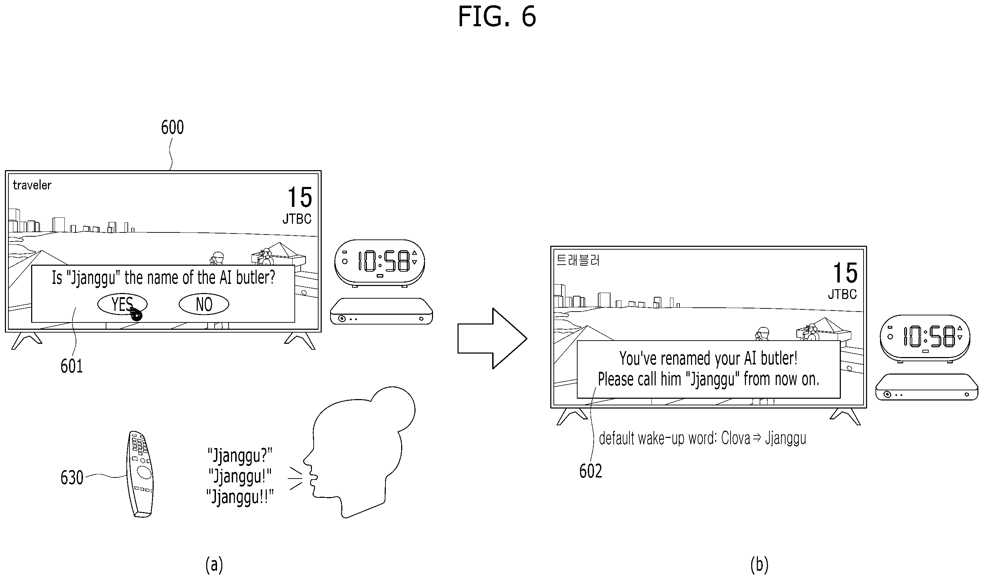

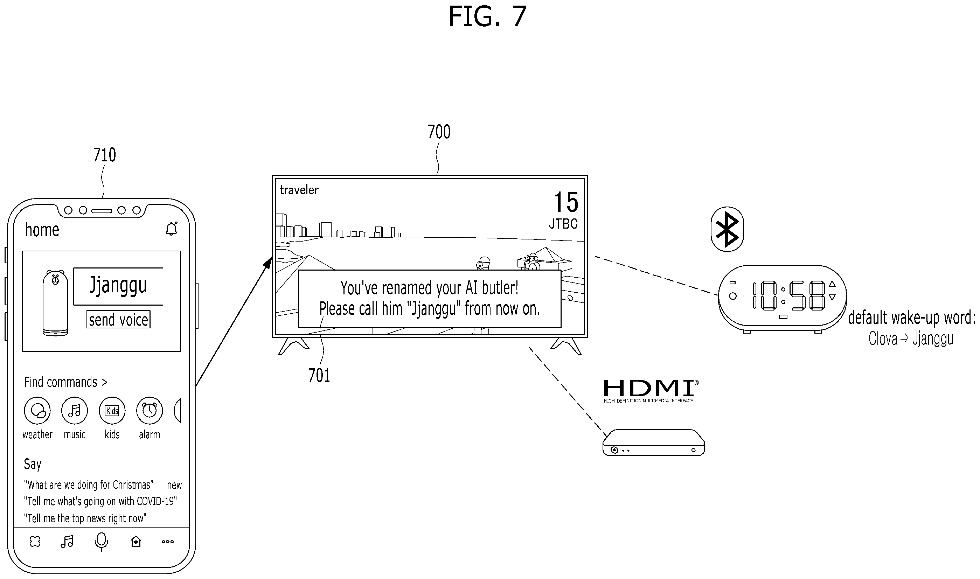

Obviously, it is also possible to change the wake-up word of the AI speaker 510 using other media rather than using the TV screen as illustrated in FIG. 5 according to other embodiments of the disclosure, which will be described later with reference to FIGS. 6 and 7.

FIG. 6 illustrates a process of changing a wake-up word of an AI speaker of a telecommunication company using a remote control of a TV according one of embodiments of the disclosure.

As illustrated in FIG. 6(a), when a user utters a specific word into a remote control 630 of a TV 600 a predetermined number of times (e.g., three times) or more times, the TV 600 of an embodiment of the disclosure paired with the remote control 630 displays a message 601 asking whether the user wants to set the word as a new wake-up word.

When the user presses an OK button or the like on the remote control 630, a memory of the TV 600 is designed to store the word as a wake-up word.

Then, as illustrated in FIG. 6(b), the TV according to an embodiment of the disclosure displays a message 602 indicating that the TV has been set to the changed wake-up word. Accordingly, the technical effect of reducing the possibility of user confusion regarding the change of the wake-up word (from the existing wake-up word "Clova" to "Jjanggu") is expected.

FIG. 7 illustrates a process of changing a wake-up word of an AI speaker of a telecommunication company using a mobile device according to one of embodiments of the disclosure. The embodiment of FIG. 6 has been described above in which a wake-up word of an AI speaker is changed using a TV remote control. In contrast, a process of changing a wake-up word of an AI speaker using a mobile device will be described with reference to FIG. 7.

First, it is assumed that a mobile device 710 and a TV 700 illustrated in FIG. 7 are paired with each other via wireless communication (e.g., Bluetooth).

The mobile device 710 is designed to allow a user to use the mobile device 710 to select "Jjanggu" as a new wake-up word to which the user wants to change an existing wake-up word "Clova".

A memory of the TV 700 according to an embodiment of the disclosure is designed to store the word as a wake-up word. Further, the TV 700 displays a message 701 indicating that the TV 700 has been set to the changed wake-up word. Thus, the technical effect of reducing the possibility of user confusion regarding the change of the wake-up word (from the existing wake-up word "Clova" to "Jjanggu") is expected.

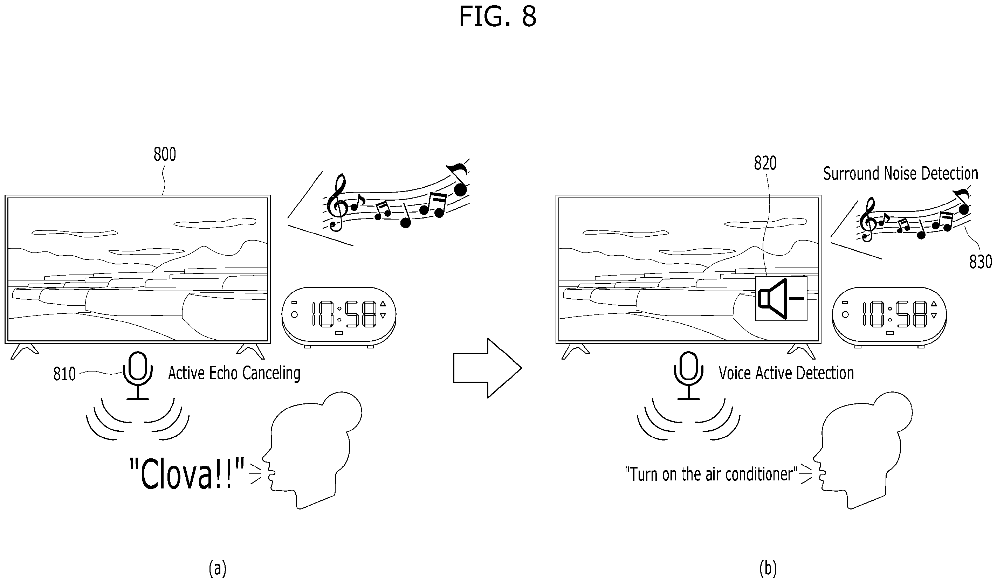

FIG. 8 illustrates a process of controlling an AI speaker by a TV according to one of embodiments of the disclosure.

While the foregoing embodiments have been described based on the assumption that a wake-up word of an AI speaker is recognized mainly using a TV remote control, a solution where an AI speaker is controlled by a TV alone without using a remote control will be described with reference to FIG. 8.

As illustrated in FIG. 8(a), it is assumed that a user utters a wake-up word (Clova) to trigger voice recognition of an AI speaker.

In this case, a TV 800 according to an embodiment of the disclosure is designed to recognize the wake-up word through a microphone 810 of the TV 800. That is, the use of a TV remote voice recognition function advantageously obviates the need for using a separate TV remote control.

Further, a controller or a speech preprocessor in the TV 800 may be designed to provide an active echo canceling function, such that upon recognition of a wake-up word (e.g., Clova), a TV volume may be automatically reduced (830) or even muted (820) as illustrated in FIG. 8(b), thereby enabling more reliable recognition of the user's next speech (e.g., "Turn on the air conditioner" after the wake-up word).

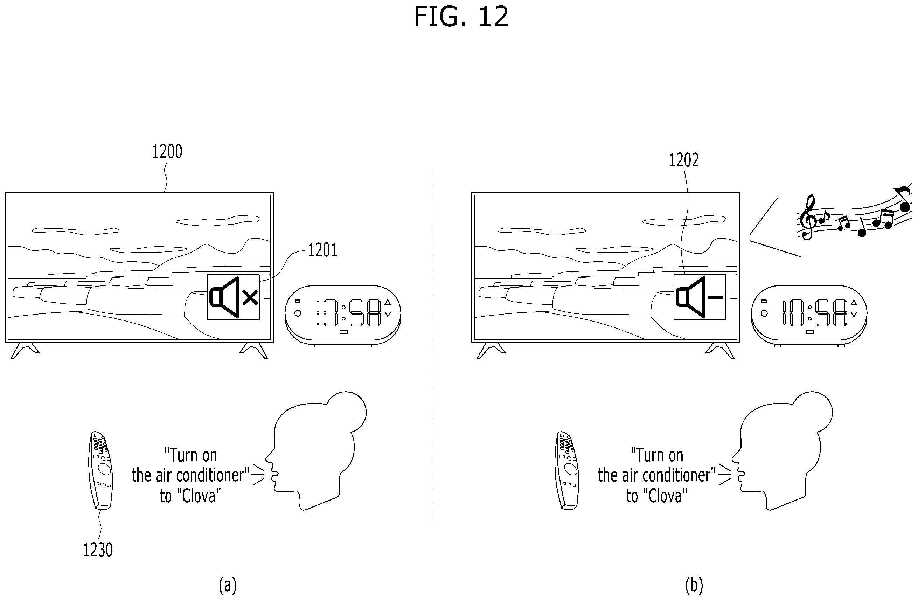

Under a certain condition, it is important to select whether to automatically reduce the TV volume (830) or mute it altogether (820), and a related embodiment will be described in more detail below with reference to FIG. 12.

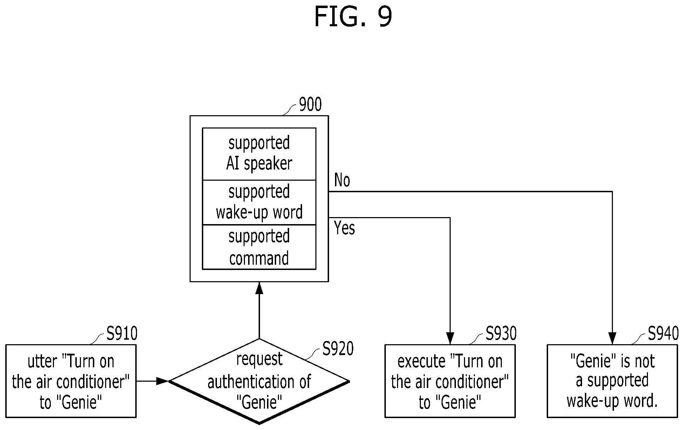

FIG. 9 illustrates a process of processing an unsupported wake-up word of an AI speaker by a TV according to one of embodiments of the disclosure.

Referring to FIG. 9, a process of identifying the types of recognizable wake-up words and executable commands for an AI speaker from a server will be described (particularly when a user utters a wrong wake-up word associated with the AI speaker).

As illustrated in FIG. 9, it is assumed that a user utters "Turn on the air conditioner to Genie" using a TV remote control or the like (S910).

The TV requests a server 900 to authenticate the wake-up word "Genie" (S920). When the server 900 determines that "Genie" corresponds to a wake-up word processable by the AI speaker, referring to a database, it transmits an acknowledgment message to the TV. The TV is designed to reduce or mute a volume, and also output "Turn on the air conditioner to Genie" through a speaker (S930).

On the contrary, when the server 900 determines that "Genie" corresponds to a wake-up word unprocessable by the AI speaker, referring to the database, it transmits a disapproval message to the TV. The TV is designed to display a message "Genie is not a supported work-up word" on a screen without reducing or muting the volume (S940).

In such a design, a corresponding function may be executed only when it is verified through an authentication process by the server 900. Accordingly, the problem of frequent muting of the TV even upon utterance of an unprocessable wake-up word may be solved.

While an embodiment including the separate server 900 has been described with reference to FIG. 9, it is also within another scope of the disclosure to implement the database included the server 900 through a memory in the TV.

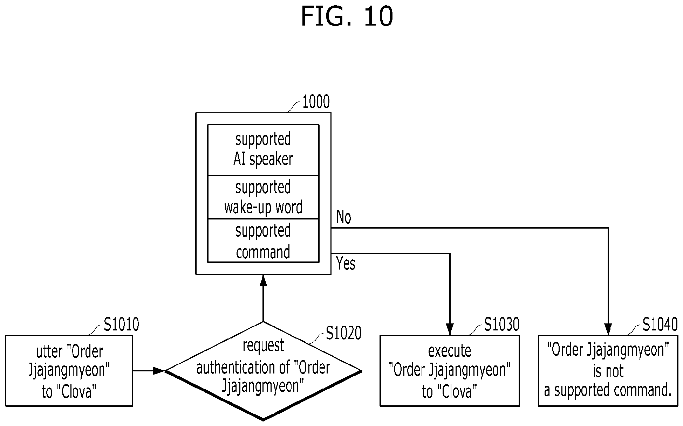

FIG. 10 illustrates a process of processing an unsupported command for an AI speaker by a TV according to one of embodiments of the disclosure.

Referring to FIG. 10, a process of identifying the types of recognizable wake-up words and executable commands for an AI speaker from a server will be described (particularly when a user utters a command which is not supported by the AI speaker).

As illustrated in FIG. 10, it is assumed that a user utters a command "Order Jjajangmyeon to Clova" using a TV remote control or the like (S1010).

The TV requests a server 1000 to authenticate the command "Order Jjajangmyeon" (S1020). When the server 1000 determines that "Order Jjajangmyeon" is a wake-up word processable by the AI speaker, referring to a database, it transmits an acknowledgment message to the TV. The TV is designed to reduce or mute a volume, and also to output "Order Jjajangmyeon to Clova" through the speaker (S1030).

On the contrary, when the server 1000 determines that "Order Jjajangmyeon" corresponds to a command unprocessable by the AI speaker, it transmits a disapproval message to the TV. The TV is designed to display a message "Order Jjajangmyeon is not a supported command" on a screen without reducing or muting the volume (S1040).

In such a design, a corresponding function may be executed only when it is verified through an authentication procedure by the server 1000. Accordingly, the problem of frequent muting of the TV even upon utterance of an unprocessable command may be solved.

In another embodiment of the disclosure, when the AI speaker is not capable of processing a command uttered by the user (e.g., "Order Jjajangmyeon"), the TV may be designed to process the command directly instead of the process S1040 of outputting the message "Order Jjajangmyeon is not a supported command" on the TV screen.

For example, the TV is designed to automatically place an order through a delivery application (order Jjajangmyeon to the address) by identifying information about an address where the TV is installed based on a fixed IP address or using user address information stored in a memory.

However, when the TV is unable to specifically identify the address on its own, it is designed to deliver a command unprocessable by the AI speaker to a mobile device paired with the TV and automatically place an order through a delivery application installed on the mobile device (order Jjajangmyeon to the address).

While an embodiment including the separate server 1000 has been described with reference to FIG. 10, it is also within another scope of the disclosure to implement the database included in the server 1000 through the memory in the TV.

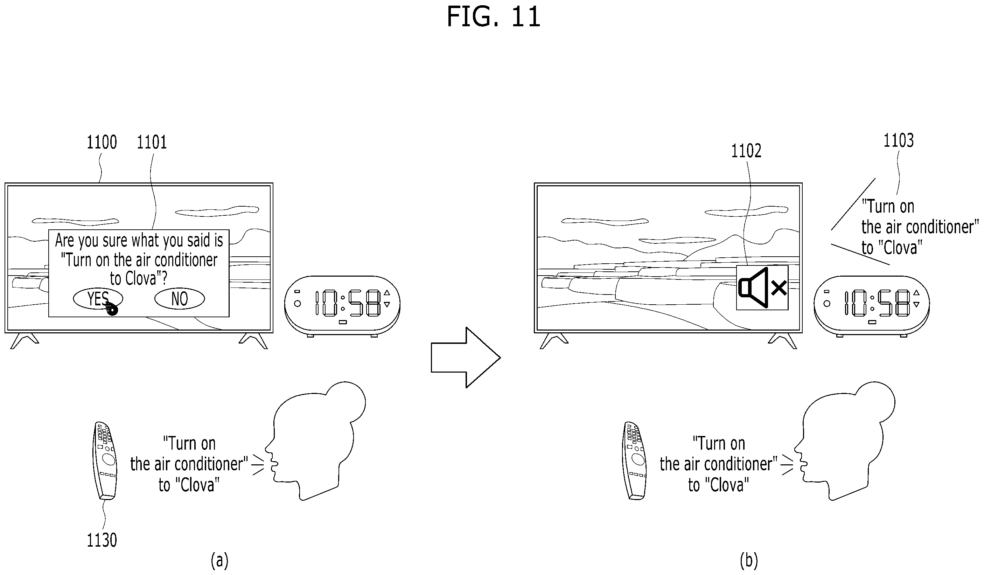

FIG. 11 illustrates a process of learning and processing a user speech pattern by a TV according to one of embodiments of the disclosure to prevent wrong recognition of an AI speaker.

Since different individuals have different pronunciations and accents, it is designed that a user speech pattern is learned and processed.

For example, as illustrated in FIG. 11(a), when a user utters "Turn on the air conditioner to Clova," a remote control 1130 transmits the voice command to a TV 1100.

Further, the TV 1100 displays text 1101 of the voice command uttered by the user on a screen. The TV 1100 displays a message requesting the user to utter the same speech again, if the voice command is different from a speech that the user intended. The TV may be trained on the user's pronunciation or accent by repeating this process a predetermined number of times.

After the learning is completed (in the absence of a correction request from the user), the TV according to an embodiment of the disclosure is changed to a mute state 1102 and directly outputs the user's speech including a wake-up word in a format 1103 recognizable by the AI speaker, without displaying an inquiry message 1101, as illustrated in FIG. 11(b).

FIG. 12 illustrates a process of adaptively improving the speech recognition performance of an AI speaker, taking into account, for example, an ambient environment or a volume state by a TV according to one of embodiments of the disclosure.

As described above, one of the features of the disclosure is to reduce or mute the volume of the TV, for recognition at the AI speaker, and in particular, another embodiment of the disclosure proposes a new criterion for distinguishing between a case of reducing the volume and a case of muting the TV.

As illustrated in FIG. 12(a), it is assumed that a user utters a speech to control an AI speaker via a remote control 1230 (e.g., "Turn on the air conditioner to Clova").

When a current volume level of a TV 1200 of an embodiment of the disclosure is set to, for example, 75% or more of its maximum value, it takes too much time to step down the volume. Therefore, the TV 1200 stops the audio output of content (e.g., a broadcast program) and is switched to a mute state 1201. The TV then outputs a wake-up word, which has the technical effect of increasing the recognition accuracy and recognition speed of the AI speaker.

When an ambient noise level of the TV 1200 is equal to or greater than, for example, 85dB, there is a possibility that the AI speaker may not recognize a wake-up word output through a TV speaker simply by reducing the TV volume. Accordingly, the TV 1200 according to an embodiment of the disclosure stops the audio output of the content (e.g., a broadcast program) and is switched to the mute state 1201. The TV then outputs the wake-up word, which has the technical effect of increasing the recognition accuracy and recognition speed of the AI speaker.

Unlike FIG. 12(a), FIG. 12(b) is based on the assumption that the audio volume of current content output from the TV is relatively low and/or the ambient noise level is low.

For example, when the current volume level of the TV is currently set to be, for example, less than 75% of its maximum value, the volume level is reduced by only one level (1202). Then, the TV outputs the wake-up word. Since the audio volume of the broadcast content is relatively low, the technical effect that the user may hear the broadcast audio and at the same time the AI speaker operates without error is expected.

When the ambient noise level of the TV 1200 is less than, for example, 85dB, the TV volume is reduced by only one level (1202). Then, the TV outputs the wake-up word. Since the audio volume level of the broadcast content is relatively low, the technical effect that the user may hear the broadcast audio and at the same time, the AI speaker may operate without error is expected.

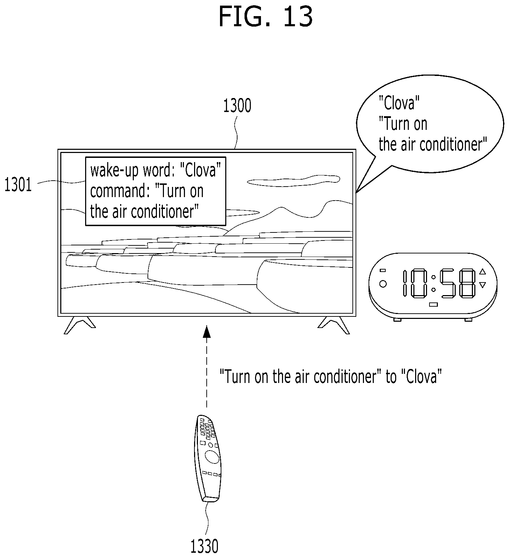

FIG. 13 illustrates a process of separately displaying a wake-up word and a command by a TV according to one of embodiments of the disclosure. With reference to FIG. 13, an embodiment of reinforcing a feedback result to a user will be described below.

As illustrated in FIG. 13, a remote control transmits a voice command received from a user (e.g., Turn on the air conditioner to Clover) to a TV 1300.

The TV 1300 according to an embodiment of the disclosure displays a notification message 1301 that separates a wake-up word (e.g., "Clova") and a command (e.g., "Turn on the air conditioner") from each other.

Therefore, it has the technical effect of enabling the user to check in real time whether each of the wake-up word and the command has been entered correctly.

The disclosure may be implemented as computer-readable code on a medium on which a program is recorded. The computer-readable medium includes any kind of recording device that stores data readable by a computer system. Examples of the computer-readable medium include hard disk drive (HDD), solid state disk (SSD), silicon disk drive (SDDs), ROM, RAM, CD-ROM, magnetic tape, floppy disk, optical data storage device, and so on, and also includes those implemented in the form of carrier waves (e.g., transmission over the Internet). The computer may also include the controller 180 of the terminal. Accordingly, the above detailed description is not to be construed as limiting in any respect and should be considered exemplary. The scope of the disclosure is to be determined by a reasonable interpretation of the appended claims, and all changes within the equivalents of the disclosure are included in the scope of the disclosure.

### [Mode for Invention]

Various embodiments of the present disclosure have been described in "Best Mode" which is the previous content.

### [Industrial Applicability]

Embodiments of the disclosure are applicable to TVs, remote controls, STBs, AI speakers, and so on. Therefore, their industrial applicability is acknowledged.

## Claims

1. A method of controlling a system including a TV and a remote control, the method comprising:
outputting a video signal of content received from an STB through a screen of the TV;
outputting an audio signal of the content received from the STB through a speaker of the TV;
receiving a first wake-up word corresponding to an AI speaker of the STB through a microphone of the remote control;
transmitting the first wake-up word to a transceiver of the TV through a wireless communication transceiver of the remote control; and
outputting a second wake-up word through the speaker of the TV.

2. The method of claim 1, further comprising, when the second wake-up word is output, stopping the output of the audio signal of the content or reducing a volume of the audio signal of the content, according to a volume level of the TV.

3. The method of claim 2, wherein when the volume level of the TV is set to 75% or more of a maximum value, the output of the audio signal of the content is stopped.

4. The method of claim 1, further comprising, when the second wake-up word is output, stopping the output of the audio signal of the content or reducing a volume of the audio signal of the content, according to ambient noise of the TV.

5. The method of claim 4, wherein when the ambient noise of the TV is equal to or greater than 85dB, the output of the audio signal of the content is stopped.

6. The method of claim 5, wherein the ambient noise of the TV is acquired through a microphone of the TV.

7. The method of claim 1, wherein the first wake-up word and the second wake-up word are the same or different.

8. The method of claim 1, wherein the AI speaker is implemented separately from the STB or integrally with the STB.

9. The method of claim 1, further comprising storing the first wake-up word by mapping the first wake-up word to a specific number on the remote control in a memory of the TV.

10. The method of claim 9, further comprising outputting the second wake-up word through the speaker of the TV in response to selection of the specific number on the remote control.

11. A system comprising:
a TV outputting a video signal and an audio signal of content received from an STB; and
a remote control receiving a first wake-up word corresponding to an AI speaker of the STB and transmitting the first wake-up word to the TV,
wherein the TV outputs a second wake-up word.

12. The system of claim 11, wherein when the second wake-up word is output, the TV stops the output of the audio signal of the content or reduces a volume of the audio signal of the content, according to a volume level of the TV.

13. The system of claim 12, wherein when the volume level of the TV is set to 75% or more of a maximum value, the TV stops the output of the audio signal of the content.

14. The system of claim 11, wherein when the second wake-up word is output, the TV stops the output of the audio signal of the content or reduces a volume of the audio signal of the content, according to ambient noise of the TV.

15. The system of claim 14, wherein when the ambient noise of the TV is equal to or greater than 85dB, the TV stops the output of the audio signal of the content.

16. The system of claim 15, wherein the ambient noise of the TV is acquired through a microphone of the TV.

17. The system of claim 11, wherein the first wake-up word and the second wake-up word are the same or different.

18. The system of claim 11, wherein the AI speaker is implemented separately from the STB or an integrally with the STB.

19. The system of claim 11, wherein the TV stores the first wake-up word by mapping the first wake-up word to a specific number on the remote control.

20. The system of claim 19, wherein the TV outputs the second wake-up word through the speaker of the TV in response to selection of the specific number on the remote control.
